(19) Europäisches Patentamt / European Patent Office / Office européen des brevets

(11) **EP 2 955 826 B1**

(12) **EUROPEAN PATENT SPECIFICATION**

(45) Date of publication and mention
of the grant of the patent:
**05.04.2017 Bulletin 2017/14**

(51) Int Cl.:
*H02M 1/14* *(2006.01)*       *H05B 33/08* *(2006.01)*
*H02M 3/335* *(2006.01)*

(21) Application number: **15171644.6**

(22) Date of filing: **11.06.2015**

(54) **LINE RIPPLE COMPENSATION FOR SHIMMERLESS LED DRIVER**

LEITUNGSWELLENKOMPENSIERUNG FÜR SCHIMMERLOSEN LED-TREIBER

COMPENSATION D'ONDULATIONS DE LIGNE POUR PILOTE DE DEL SANS SCINTILLEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.06.2014 US 201414303301**

(43) Date of publication of application:
**16.12.2015 Bulletin 2015/51**

(73) Proprietor: **Power Integrations, Inc.
San Jose, California 95138 (US)**

(72) Inventors:
• **Mao, Mingming**
  **Saratoga, CA 95070 (US)**
• **Pastore, Tiziano**
  **Los Gatos, CA 95030 (US)**
• **Pregitzer, Ricardo Luis Janezic**
  **Campbell, CA 95008 (US)**
• **Zhang, Michael Yue**
  **Mountain View, CA 94043 (US)**
• **Vaughan, Peter**
  **Los Gatos, CA 95032 (US)**

(74) Representative: **Conroy, John
Fish & Richardson P.C.
Highlight Business Towers
Mies-van-der-Rohe-Straße 8
80807 München (DE)**

(56) References cited:
**WO-A1-2014/035893       US-A1- 2004 070 382**

• **XINKE WU ET AL: "Variable On-Time
(VOT)-Controlled Critical Conduction Mode Buck
PFC Converter for High-Input AC/DC HB-LED
Lighting Applications", IEEE TRANSACTIONS
ON POWER ELECTRONICS, INSTITUTE OF
ELECTRICAL AND ELECTRONICS ENGINEERS,
USA, vol. 27, no. 11, 1 November 2012
(2012-11-01), pages 4530-4539, XP011448247,
ISSN: 0885-8993, DOI:
10.1109/TPEL.2011.2169812**

**Description**

BACKGROUND INFORMATION

Field of the Disclosure

This disclosure relates to power supplies and, more particularly, to control circuits for power supplies.

Background

LED lighting has become popular in the industry due to the many advantages that this technology provides. For example, LED lamps typically have a longer lifespan, pose fewer hazards, and provide increased visual appeal when compared to other lighting technologies, such as compact fluorescent lamp (CFL) or incandescent lighting technologies. The advantages provided by LED lighting have resulted in LEDs being incorporated into a variety of lighting technologies, televisions, monitors, and other applications.

It is often desirable to implement LED lamps with a dimming functionality to provide variable light output. One known technology that has been used for analog LED dimming is the phase angle dimming either by leading edge or trailing edge control. In a known example, a Triac circuit can be used that operates by delaying the beginning of each half-cycle of alternating current (ac) power, which is known as "phase control." By delaying the beginning of each half-cycle, the amount of power delivered to the load (e.g., the lamp) is reduced, producing a dimming effect in the light output by the lamp. In most applications, the delay in the beginning of each half-cycle is not noticeable to the human eye because the variations in the phase controlled line voltage and the variations in power delivered to the lamp occur so quickly. For example, Triac dimming circuits work especially well when used to dim incandescent light bulbs since the variations in phase angle with altered ac line voltages are immaterial to these types of bulbs. However, flicker may be noticed when Triac circuits are used for dimming LED lamps.

Flickering in LED lamps can occur because these devices are typically driven by LED drivers having regulated power supplies that provide regulated current and voltage to the LED lamps from ac power lines. Unless the regulated power supplies that drive the LED lamps are designed to recognize and respond to the voltage signals from Triac dimming circuits in a desirable way, the Triac dimming circuits are likely to produce non-ideal results, such as limited dimming range, flickering, shimmering, blinking, and/or color shifting in the LED lamps.

Some causes of these non-ideal results in using Triac dimming circuits with LED lamps are in part due to the characteristic of the Triac itself. For example, a Triac is a semiconductor component that behaves as a controlled ac switch. Thus, the Triac behaves as an open switch to an ac voltage until it receives a trigger signal at a control terminal, causing the switch to close. However, many Triac dimming circuits include an inherent imbalance in phase angle and conduction angles from cycle to cycle. These variances in phase angle and conduction angles in consecutive cycles can result in voltage amplitude variations at the input and also as output current variations (i.e., ripple) at the output of the power converter. The output current ripple may appear as light fluctuations and shimmering in an LED load.

WO 2014/035893 describes a method that includes determining a power adjustment to a load, determining whether a switching frequency of a pulse width modulation signal is within a specific range, and adjusting the switching frequency of the pulse width modulation signal based on the power adjustment to control power transfer to the load. The switching frequency is adjusted to remain in the specific range.

US 2004/0070382 describes a multiphase ripple voltage regulator generator that employs a hysteretic comparator referenced to upper and lower voltage thresholds. The hysteretic comparator monitors a master ripple voltage waveform developed across a capacitor supplied with a current proportional to the difference between the output voltage and either the input voltage or ground. The output of the hysteretic comparator generates a master clock signal that is sequentially coupled to PWM latches, the states of which define the durations of respective components of the synthesized ripple voltage.

The document entitled "Variable On-Time (VOT)-Controlled Critical Conduction Mode Buck PFC Converter for High-Input AC/DC HB-LED Lighting Applications" by Wu et al. (IEEE Transactions on Power Electronics 27 (11) p. 4530-4539, 2012) describes a variable on-time controller for a critical conduction mode (CRM) buck PFC front-end converter for isolated high-brightness LED applications

BRIEF DESCRIPTION OF THE DRAWINGS

Non-limiting and non-exhaustive embodiments of the present disclosure are described with reference to the following figures, wherein like reference numerals may refer to like parts throughout the various figures.

FIG. 1 is a block diagram of an example power converter including a controller with a line ripple compensation block.

FIG. 2A illustrates an output current signal and an input voltage signal for a power converter with line ripple compensation block disabled.

FIG. 2B illustrates an output current signal and an input voltage signal for a power converter with line ripple compensation block enabled.

FIG. 3 is a schematic of a device having an LED load, a switching regulator, and a controller with a line ripple compensation control block.

FIG. 4A is a block diagram of a controller with a line ripple compensation block.

FIG. 4B is a functional block diagram of a frequency modulator.

FIG. 4C further illustrates logic components of a frequency modulator.

FIG. 5A is a flow chart illustrating a process of detecting and enabling line ripple compensation.

FIG. 5B is a flow chart illustrating a process of controlling and varying the switching frequency to compensate for line ripple.

FIGs. 6A-6C illustrate an input voltage signal, and input current signals and output current signals with and without ripple compensation.

Corresponding reference characters may indicate corresponding components throughout the several views of the drawings. Skilled artisans will appreciate that elements in the figures are illustrated for simplicity and clarity and have not necessarily been drawn to scale. Common but well-understood elements that are useful or necessary in commercially feasible embodiments are often not depicted in order to facilitate understanding of the various embodiments.

DETAILED DESCRIPTION

In the following description, numerous specific details are set forth in order to provide a thorough understanding of the present invention. It will be apparent, however, to one having ordinary skill in the art that the specific detail need not be employed to practice the present invention. In other instances, well-known materials or methods have not been described in detail in order to avoid obscuring the present invention.

Reference throughout this specification to "one embodiment", "an embodiment", "one example" or "an example" means that a particular feature, structure or characteristic described in connection with the embodiment or example is included in at least one embodiment of the present invention. Thus, appearances of the phrases "in one embodiment", "in an embodiment", "one example" or "an example" in various places throughout this specification are not necessarily all referring to the same embodiment or example. Particular features, structures, or characteristics may be included in an integrated circuit, an electronic circuit, a combinational logic circuit, or other suitable components that provide the described functionality.

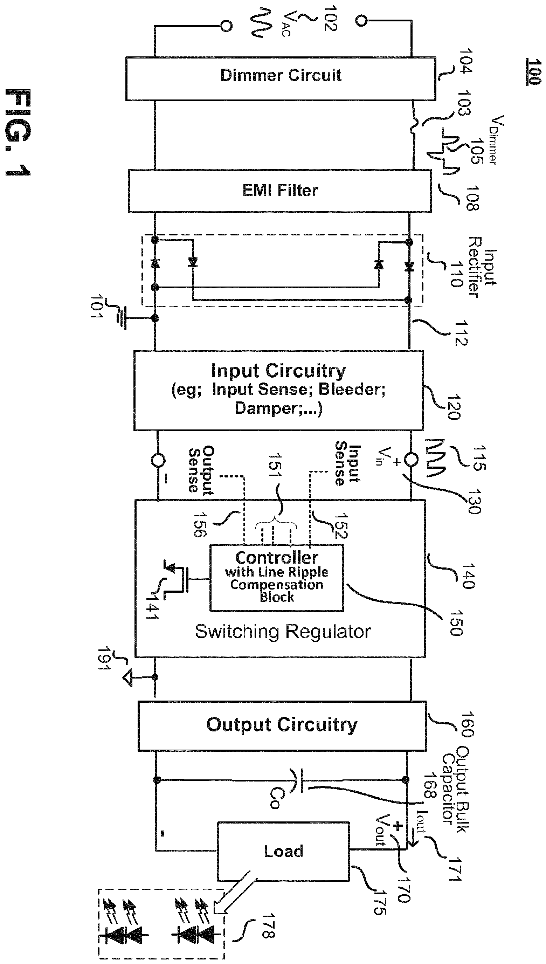

FIG. 1 is a block diagram of an example power converter 100 including a controller 150 with a line ripple compensation block. In the illustrated example, power converter 100 is an LED driver for providing power to a load 175 (e.g; an LED load 178). Power converter 100 includes a switching regulator 140 and a dimmer circuit 104 (that in one example may be a Triac Dimmer). As shown, dimmer circuit 104 is coupled to receive full sinusoidal (i.e., a time-varying) waveform 102 (ac line signal $V_{AC}$) at an input of the power converter 100. Dimmer circuit 104 may apply, through a fusible protection device 103, a phase controlled voltage, either by delaying the beginning of each half-cycle of input ac line signal $V_{AC}$ (leading-edge control) or by cutting the end portion of each half-cycle of input ac line signal $V_{AC}$ (trailing-edge control), to produce a phase controlled Dimmer signal 105. By eliminating a portion of each half-cycle of the input ac line signal $V_{AC}$ 102, the amount of power delivered to the load 175 (e.g., an array 178 of LED lamps) is reduced and the light output of the LED appears dimmed. Power converter 100 may further include input rectifier bridge 110 coupled to receive dimmer signal 105 through electromagnetic interference (EMI) filter 108. As shown in the depicted example, the rectified voltage 112 produced by the rectifier bridge 110 (represented by symbolic waveform 115) has a conduction phase angle in each half line cycle that is controlled by dimmer circuit 104.

The rectified phase controlled voltage 112, through the input circuitry block 120, provides a rectified input voltage $V_{in}$ 130 at an input terminal of the switching regulator 140. The input circuitry block 120 in one example may include circuits and components/blocks such as input sense, inductive and capacitive filter, bleeder, damper and other required or optional interface circuits/components depending on the application. Power converter 100 may be an isolated or non-isolated converter with the same or shifted input/output reference grounds (e.g., reference grounds 101 and 191 may be either directly coupled or shifted relative to each other). Non-limiting examples of isolated converters include Flyback and forward converters, and non-limiting examples of non-isolated converters include Buck, Buck-boost and Tapped Buck converters. The high frequency switching of the switch element 141 of the switching regulator 140 is controlled by the controller 150 that, based on teaching of present application, includes a line ripple compensation block.

The rectified voltage 112, unaffected or substantially unaffected by the input circuitry 120, is applied to the input terminal 130 of the switching regulator 140 and also may be provided to the controller 150. In one example, controller 150 may be referenced to the input ground 101 (primary control). The regulated output of switching regulator 140, after passing through some output circuit block 160, may be applied across the bulk capacitor 168, which is then applied as an output voltage Vo 170 and an output current Io 171 to load 175 which in one example may be an array of LED lamps 178.

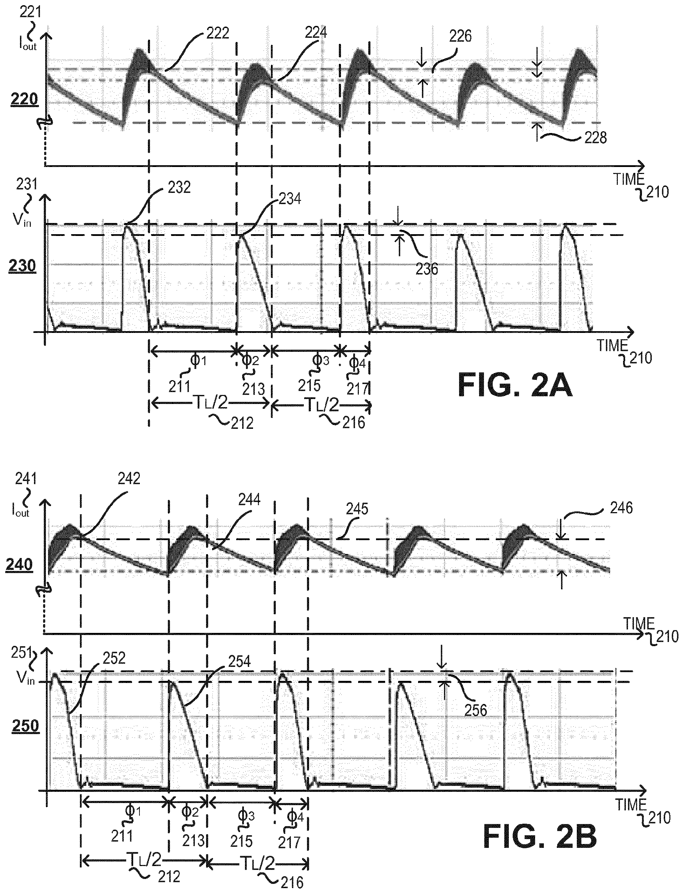

FIGs. 2A and 2B illustrate various waveforms associated with an LED driver with a Triac phase controlled dimmer. FIG. 2A illustrates output current $I_{out}$ 221 and input phase controlled rectified voltage $V_{in}$ 231 for an example LED driver without activation of the line ripple compensation block, while FIG. 2B shows output current $I_{out}$ 241 and input phase controlled rectified voltage $V_{in}$ 251 for an example LED driver with activation of a line ripple compensation block.

As shown in FIG. 2A, output current 221 includes a low frequency (e.g., 120Hz) ripple due to sinusoidal variation of line half cycles. Output current also includes an imbalance (i.e., peak value variation) that exists in voltage phase angles ($\phi$1 and $\phi$3) and conduction angles ($\phi$2 and $\phi$4) in consecutive half-line cycles 212 and 216 due to an inherent asymmetry of a Triac dimmer circuit. These variations in phase angles results in a voltage amplitude imbalance (variations) in the output current. For example, diagram 230 of FIG. 2A shows several line cycles of the rectified phase controlled input voltage $V_{in}$ 251 for a leading edge Triac dimmer where the Triac controls the phase angle $\phi$1 and conduction angle $\phi$2 ($\phi$1 + $\phi$2 = $\pi$). At the first half line cycle 212 and during the phase angle $\phi$1 211 the Triac is off and thus is not conducting, while during the conduction angle $\phi$2 213 the Triac is on and conducting. In the second consecutive half-line cycle 216 and during the phase angle $\phi$3 215 the Triac is again off while during the phase angle $\phi$4 217 the Triac is again on and conducting. Due to the intrinsic unsymmetrical conduction of Triac in positive and negative half line cycles the conduction angles $\phi$2 213 and $\phi$4 217 may be different resulting in a peak value difference 236 in consecutive half-cycles. That is, diagram 230 illustrates input voltage Vin 231 as having a first peak value 232 in a first half-line cycle 212 and a second lower peak value 234 in the next consecutive half-line cycle 216. As mentioned above, this variation in phase and conduction angles is due to the inherent asymmetry of a Triac operating in positive versus negative half line cycles of the input voltage, and not due to a received change in control of the Triac. In other words, the control terminal/ signal of the Triac may remain constant, but the variations in phase and conduction angles between consecutive half-line cycles may appear.

Diagram 220 in FIG. 2A, shows waveform of several line cycles of the output current $I_{out}$ 221 (e.g., 171 at output terminal in FIG. 1) without the ripple compensation feature activated. As described above, diagram 230 illustrates that in consecutive half-cycles the input voltage Vin has a peak value difference 226. Diagram 220 illustrates output current Iout 221 having low frequency 120Hz ripple due to low-frequency time variations of line half cycles as well as having 60 Hz amplitude fluctuations. As shown, output current 221 includes an average peak-to-peak ripple value 228. The 60 Hz amplitude fluctuations are between a first peak value 222 in a first half-line cycle and a second lower peak value 224 in the next consecutive half-line cycle. The ripple in the output current is due to time variations (e.g., sinusoidal) of line half cycles as well as the input voltage peak value difference 226 which may result in LED shimmer at the output.

FIG. 2B illustrates similar waveforms as FIG. 2A. However, FIG. 2B illustrates of the input voltage and output load current after adding/ activating/ enabling the line ripple compensation block feature. Diagram 250 illustrates input voltage Vin 251 with Triac leading-edge control of the phase angle $\phi$1 and conduction angle $\phi$2. As shown in diagram 250, a peak value difference 256 remains at the input voltage Vin 251, due to the aforementioned difference between phase angles $\phi$1 and $\phi$3 and between conduction angles $\phi$2 and $\phi$4. However, diagram 240 illustrates that with the line ripple compensation block enabled, the output current Iout 241 includes a reduced average peak-to-peak ripple value 246 as well as reduced amplitude fluctuations and thus may result in an improved shimmer-less LED performance. It is appreciated that in FIGs 2A and 2B on output current diagrams 210 and 240, the thickness of scope captured traces represents the unfiltered HF (high frequency) noise picked by the scope current probe that is imposed on the output current waveform.

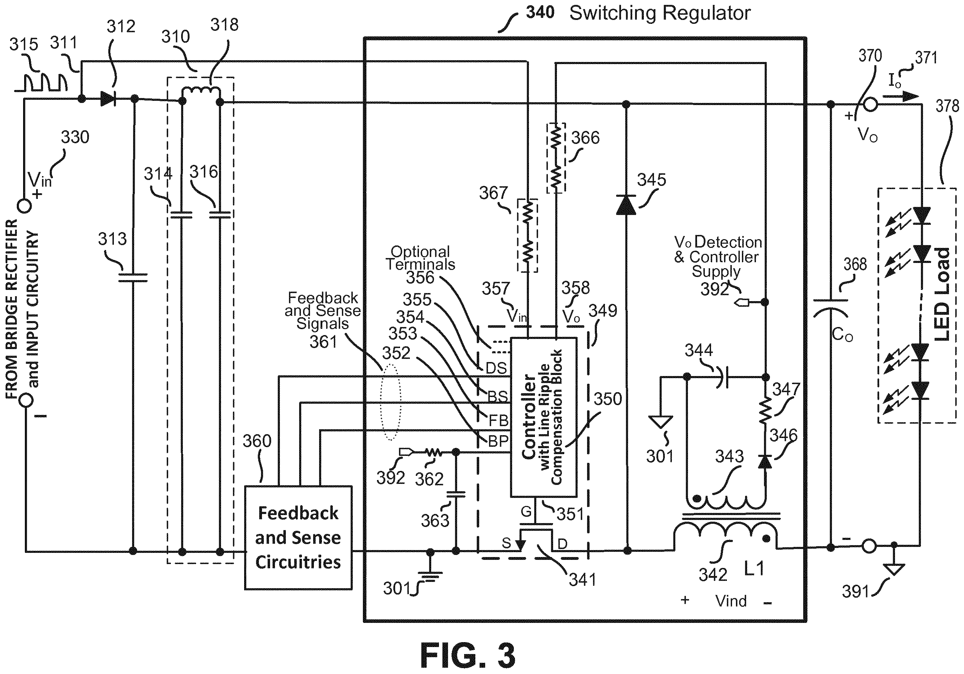

FIG. 3 is a schematic of a device having an LED load, a switching regulator, and a controller with a line ripple compensation control block. In the example of FIG, 3, switching regulator 340 is configured as an LED driver utilizing a low-side switch Buck topology. However, embodiments of the present disclosure for ripple compensation could be used for any other topology of power converters such as (but not limited to) Buck-Boost, isolated and non-isolated Flyback.

The phase-controlled rectified input voltage $V_{in}$ 330 (e.g., waveform 315) is received from the bridge rectifier and input circuitry (e.g., 110 and 120 in FIG 1) to be applied to the switching regulator 340 through an optional rectifier 312. The optional rectifier diode 312 (to isolate the line sensed input voltage $V_{in}$ 357 to follow the rectified input voltage 315 instead of the voltage across the bulk capacitor 313) and an optional noise $\pi$ filter 310 including an inductor 318 and capacitors 314 and 316 may be inserted at interface of the switching regulator 340.

The switching regulator 340 includes an energy transfer element having inductors L1 342 and 343 (auxiliary winding), a diode 345, a switch 341 and a controller 350. Whenever switch 341 is closed energy (through passing current) will be transferred to the load which will charge the magnetic field of the inductor 342. When switch 341 opens the charged energy in the magnetic field of the inductor 342 resumes circulating the current through the load and diode 345.

Switch 341 is controlled by the drive signal from pin 351 of the controller 350 that includes the output ripple compensation feature to control the transfer of energy from input to output of the converter. Switch 341 and controller 350 in one embodiment could be included in a monolithic or hybrid integrated circuit (IC) structure 349 and in one example switch 341 is a MOSFET with drain terminal D, source terminal S and gate terminal G.

The switching regulator 340 in embodiment of FIG. 3 is a low side switching Buck. Switch 341 and inductor L1 342 are on a low side, return line, of the switching regulator 340 and the MOSFET switch source terminal S is directly connected to the primary ground to reduce EMI generated by an otherwise switching node which may be used for heatsinking. The input line $V_{in}$ information from high line node 311 through a resistor module 367 is provided to the terminal $V_{in}$ 357 of the controller 350 and the output voltage $V_o$ information through auxiliary winding 343 and a resistor module 366 is provided to the terminal $V_o$ 358 of the controller 350. It is appreciated that during off-time of the power switch 341 the voltage on auxiliary winding 343 may represent the output voltage.

Controller 350 generates the drive signal on terminal 351 by processing the input signals on terminals: FB 353, BS 354, DS 355 and $V_{in}$ 357 (from feedback circuit, bleeder circuit, damper circuit and from the input line sense).

The inductor L1 342 that is inserted on the low line of the switching regulator (on the path of return current from LED load) is the main energy transfer element. Auxiliary winding 343 may provide a rectified DC voltage 392 through rectifier diode 346, resistor 347 and capacitance 344 that is referenced to the input ground 301 and may provide supply voltage for the controller at BP pin 352 of the controller. As shown in FIG. 3, inductor L1 342 is coupled to receive a time-varying (e.g., sinusoidal) inductor voltage $V_{ind}$.

It is appreciated that in the example of FIG. 3, to avoid obscuring certain aspects of the present disclosure, the feedback and sense signals 361 to the input terminals FB 353, BS 354, DS 355 of the controller 350 are illustrated through a single block of "feedback and sense circuitries" 360. The Bypass pin BP 352 provides supply voltage for the controller and is coupled through resistor 362 and capacitor 363 to the rectified voltage of the auxiliary winding 343. Controller 350 may include extra pins (e.g., 356) to add extra features for further improved performance of the LED driver. It is appreciated that even though the switching regulator of FIG. 3 is a non-isolated converter the output reference ground 391 could be shifted in comparison to the input reference ground 301. Controller 350 and the source S of switch 341 are referenced to the input ground 301.

The output of the switching regulator 340 is coupled through a bulk output capacitor $C_o$ 368 to the LED load 378 to provide output voltage $V_{out}$ 370 and regulated output current $I_o$ 371 to the LED array 378.

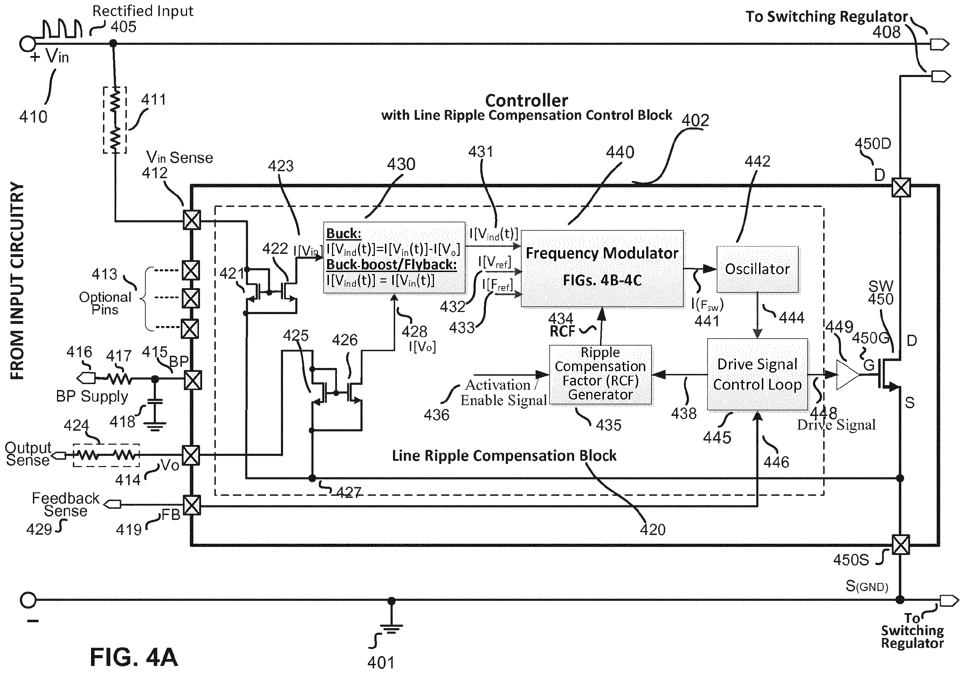

FIG. 4A is a block diagram of a controller 402 with a line ripple compensation block 420. In a PFC converter with no bulk capacitance after the bridge rectifier, the sinusoidal waveform of the full rectified line voltage is retained. The input of the converter represents a resistive impedance $i(t)=v(t)/R$ and the input current due to the PFC control follows the rectified sinusoidal voltage waveform. However, the disadvantage in an LED driver application specifically with phase angle dimming is that the retained low frequency input current ripples may appear on output current (load current fluctuation) that could cause the LED light shimmering that becomes even more noticeable in dimmed conditions.

In CCM (Continuous Conduction Mode) operation of the switching regulator to force the input line current $i(t)$ to follow the variation of the input sinusoidal voltage $v(t)$ during each line cycle, one method is to control the duty cycle of the drive signal provided to the power switch (eg; a MOSFET). To control the duty cycle either on-time ($t_{on}$) and/or switching frequency_of the drive signal could be changed.

In many applications, the DCM (Discontinuous Conduction mode) or critical mode operation of the switching regulator is more popular because of the low cost and simplicity of PFC control. In DCM operation the switching current pulses through the inductor fall to zero and all the magnetic energy in the inductor is discharged before the next switching cycle starts. In DCM operation of the PFC switching regulator the input line current $I_{in}(t)$ is the average of current pulses through the inductor that is defined by the voltage across the inductor and thus the line current follows the line voltage.

The line ripple compensation block 420 may be used for LED drivers with DCM or critical mode PFC operation. In LED drivers with DCM or critical mode PFC operation the low frequency current ripple, specifically during phase controlled dimming, may modulate on the output current causing light shimmer. Without activation of the line ripple compensation block 420 the PFC switching regulator operates in DCM/Critical mode with fixed/ constant on-time $t_{on}$ and fixed/ constant switching frequency, $F_{sw}$ (= 1/ $T_{sw}$) during the line sinusoidal variations of input line cycle.

When switch 450 is closed the current pulse through the inductor $L_{ind}$ ramps linearly from zero and during on-time of the switch ($t_{on}$) rises to a peak value $I_{pulse}(t)$ in response and proportional to the voltage across inductor $V_{ind}(t)$ at time $t$ of the line sinusoidal variations: $V_{ind}(t) = L_{ind} * I_{pulse}(t) / t_{on}$. Voltage across the inductor $V_{ind}(t)$ depends on the topology of the switching regulators. For example, in a Buck switching regulator the inductor voltage definition is $V_{ind}(t) = V_{in}(t) - V_o$, while in a Buck-boost or Flyback switching regulator the inductor voltage is defined as $V_{ind}(t) = V_{in}(t)$. In the above relations $V_{in}(t)$ presents the input voltage sinusoidal variations and $V_o$ is the output voltage.

Embodiments of the present disclosure include reducing the effect of low frequency output ripple and the light shimmering by substantially flattening the top portion of the input line rectified sinusoidal current above a reference level. This can be achieved by either controlling on-time $t_{on}$ or switching frequency $F_{sw}$ as discussed in further detail below.

The average of inductor DCM current pulses defines the input current $I_{in}(t)$ which is proportional to the inductor voltage $V_{ind}(t)$

$$I_{pulse}(t) = V_{ind}(t) * t_{on} / L_{ind} \qquad\qquad [EQ.\ 1]$$

$$I_{in}(t) = I_{pulse}(t) * t_{on} / T_{sw} = V_{ind}(t) * t_{on}^2 * F_{sw} / L_{ind} \qquad\qquad [EQ.\ 2]$$

Inductor value, $L_{ind}$, has a predefined value and switch on-time $t_{on}$ in DCM operation may be kept constant during each line cycle. Considering that in any of Buck, Buckboost or Flyback topologies the inductor voltage during electro-magnetic charging may represent the input voltage (either $V_{ind}(t) = V_{in}(t)$ or $V_{ind}(t) = V_{in}(t) - V_o$) and considering the input current as average of DCM current pulses, it would be concluded that input current is proportionate to multiplication of inductor voltage and switching frequency $F_{sw}$ (inverse of switching period $F_{sw} = 1/T_{sw}$):

$$I_{in}(t) \sim V_{ind}(t) * F_{sw}(t) \qquad\qquad [EQ.\ 3]$$

As mentioned above, in an LED driver with PFC and phase control dimming when dimming level goes beyond a threshold (e.g., phase angle control of 130 or 150 degree) the line ripple current appearing at output may generate light shimmering effect. To reduce the low frequency current ripple effect at the output it is desired that in each half-line cycle of sinusoidal voltage variation above a predefined voltage level (i.e., a voltage threshold) the input line current to be kept constant (flattened). This predefined voltage level is referred as reference voltage or voltage threshold (in one example above 100V), wherein the switching frequency at or below reference voltage $V_{ref}$ is a fixed frequency referred as a reference frequency $F_{ref}$.

As observed in relation above, in an example where the on-time $t_{on}$ is kept constant, in each half-line cycle above the reference voltage $V_{ref}$, the line current waveform $I_{in}(t)$ can be kept constant/flattened by considering: $V_{ind}(t) * F_{sw}(t) = V_{ref} * F_{ref}$, which means above the reference level the switching frequency $F_{sw}(t)$ may be controlled as an inverse function of the line voltage sinusoidal variation, $F_{sw}(t) = F_{ref} * V_{ref}/V_{ind}(t)$ or $F_{sw}(t) \sim 1/V_{ind}(t)$.

The above relation with some mathematical manipulation can be rewritten as: $F_{sw}(t) = F_{ref} - F_{ref} \{[V_{ind}(t) - V_{ref}]/V_{ind}(t)\}$; wherein the second term indicates a modifier term that, in response to increase of inductor voltage above the reference voltage, modifies and reduces the switching frequency to keep $I_{in}(t)$ flat.

The line ripple compensation employed by line ripple compensation block 420 offers a compromise between the shimmer reduction and LED driver improved performance at deep dimming at one side and the PFC performance and harmonic distortion requirements at input of the switching regulator at the other side. The LED drivers utilizing the ripple compensation block introduced by block 420 may comply with the regulatory standards for power factor PF and total harmonic distortion THD. The line ripple compensation block 420 may be activated at a predefined low level of dimming where the PFC and THD performance is not of a main concern while the shimmer reduction and extending the dimming range is the main issue of the design. Even when the line ripple compensation block 420 is activated, transforming the input current to a flattened wave shape, the input current waveform still remains in-phase with the input sinusoidal voltage and power factor would not show a noticeable change (even though THD may have slightly changed). As will be discussed below, by selecting different options of the maximum/target value of the ripple compensation factor (RCF), either at 1 (flat input current waveform) or at a value above/below 1 (concave/convex input current waveform) any desired compromise between the input current PFC requirement and the output current ripple reduction (shimmer reduce and dimming range increase) may be achieved.

In one embodiment, all the signals required for the ripple compensation processing such as input line voltage $V_{in}(t)$, reference voltage $V_{ref}$, output voltage $V_o$, reference frequency $F_{ref}$ and switching frequency $F_{sw}$ could be transferred to the current signals as presented for the internal control blocks of the FIG. 4A and as explained below.

FIG. 4A shows the line ripple compensation block 420 including a frequency modulation block 440 inside an example LED driver controller IC 402. It is appreciated that the controller IC 402 may also include the switching element SW 450 that in one example may be a MOSFET switch with monolithic or hybrid structure on the controller IC. Drain D of the Mosfet 450 is coupled to the IC external terminal 450D, source S coupled to the IC external terminal 450S and gate 450G receiving the control signal from the Gate driver 449 that receives drive signal 448 from the drive signal control loop block 445.

The controller IC 402 may include an external terminal $V_{in}$ sense terminal 412 to be coupled through a resistor module 411 to the input voltage $V_{in}$ 410 from input circuitry ($V_m$ 130 in FIG 1) that is the phase controlled rectified line bus 405. Feedback terminal FB 419 on the controller IC 402 receives signal 429 from the Feedback sense circuitry to provide signal 446 to the drive signal control loop 445 and control switching of power switch 450 and regulate the output of LED driver.

The output sense signal through a resistor module 424 (equivalent to 366 in FIG. 3) is applied to the Vo terminal 414 (equivalent to 358 in FIG. 3) of the controller IC 402. Supply voltage for the internal blocks of controller 402 is applied from BP supply 416 (equivalent to 392 in FIG. 3) through the resistor 417 and capacitor 418 to the BP pin 415 of the controller 402. It is appreciated that the optional pins 413 on the controller IC 402 may receive any extra control signals required for the controller.

The $V_{in}$ Sense signal on terminal 412 is received through a first current mirror set of transistors 421 and 422 which transforms the voltage signal to a current signal 423 I[$V_{in}$] for processing in the controller. A second set of current mirror transistors 425 and 426 is coupled to terminal 414 Vo that provides a current signal I[$V_o$] 428 representative of the output voltage to block 430.

Block 430 receives the current signals 423 I[$V_{in}$] and 428 I[$V_o$] and outputs a current signal I[Vind] 431 representing the inductor voltage based on switching regulator topology: Buck switching regulator: I[$V_{ind}$]= I[$V_{in}$] - I[$V_o$]; and Buck-boost or Flyback switching regulator: I[$V_{ind}$]= I[$V_{in}$].

The first current mirror set of transistors (421 and 422) and the second current mirror set of transistors (425 and 426) are both referenced to the ground node 427 of the controller coupled to 450S terminal of the controller and coupled to the switching regulator ground 401.

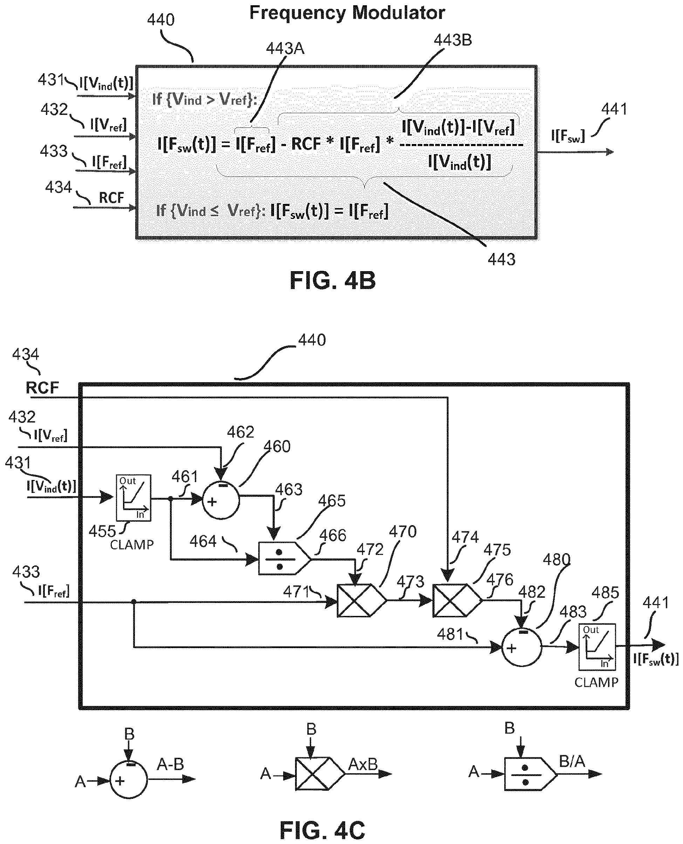

The Frequency Modulation block 440 receives signal 431 representing inductor voltage, to be processed based on the voltage and frequency at reference level of the line sinusoidal variation, I[$V_{ref}$] and I[$F_{ref}$] respectively. To avoid any hard transient at enabling/disabling of the ripple compensation feature of the LED controller that may cause instability and misbehavior of LED driver, a weighting Ripple Compensation Factor (RCF) is defined that varies between 0 and a maximum target value RCF$_{max}$ in gradual digital steps. In one example, the ripple compensation factor RCF changes between 0 and 1 in digital steps of 1/256. The RCF as a weighting factor multiplies in a frequency modification term that is applied in the Frequency Modulator block 440 as illustrated in FIGs 4B-4C. It is appreciated that by changing the RCF weighting factor from 0 to the maximum target value that may be either 1 or a value above or below 1, it may compensate the input current waveform to remain flat (RCF$_{max}$ = 1) or it may under compensate (RCF$_{max}$< 1) or over compensate (RCF$_{max}$>1) in which case above the reference level the input current waveform would look convex or concave respectively.

The weighting factor RCF increments or decrements digitally between 0 and a maximum/ target value (eg; 1, > 1 or < 1) and smoothly transforms the sinusoidal input current waveform to a flat (or concave/convex) shape over multiple line cycles to compensate the ripple current at output.

The feedback sense signal on FB pin 419 couples to input 446 of the drive signal control loop block 445. The ripple compensation factor generator block 435 based on regulation status of the output received by signal 446 and through drive signal control loop block 445 defines signal 438 for incrementing/decrementing steps of RCF.

It is appreciated that enabling/disabling (i.e., activation/deactivation) signal 436 for RCF (ripple compensation factor) generator block 435 is based on the utilized circuitry in the LED driver. Signal 436 could be generated at any predetermined level of dimming (eg; 130 or 150 degree of phase angle control or even as soon as leading/ trailing dimming edge is detected) and it is activated so that the compensation weighting factor RCF may change towards its maximum/target value RCF$_{max}$ that could be 1 or some value below or above 1 based on desired application. Activation of RCF generator block 435 may be by different means/events such as but not limited to: A.) The FB (feedback) error voltage reference changing at a specific level of dimming. In one example when the error voltage reference level changes from 300mV to 150 mV; B.) Edge detection at leading or trailing edge of phase angle control dimmer; or C.) Detection of the dimmer phase angle value going above/below some predetermined limit. In other examples any other event indicating the dimming level beyond a predetermined level may enable the ripple compensation feature.

The Frequency Modulation block 440 by receiving signal 431 representing inductor voltage I[$V_{ind}(t)$] and signals I[$V_{ref}$] and I[$F_{ref}$] representing reference voltage $V_{ref}$ and reference frequency $F_{ref}$, respectively (as current signals) and also by receiving signal RCF on terminal 434 calculates a modulated frequency to compensate the current variation. The modulated frequency calculation is based on the functions and logic shown in FIGs. 4B and 4C.

The signal 441 I($F_{sw}$) at output of the frequency modulation block 440 through the oscillator 442 may control the frequency of clock signal 444 and thus the switching frequency of the power switch 450 through the drive signal control loop block 445. The drive signal 448 through gate drive 449 applies to control terminal (in one example Gate 450G) of the power switch SW 450.

In each line cycle below the reference voltage $V_{ref}$ the frequency of the clock signal 444 and thus the switching frequency remain constant. Above the reference voltage $V_{ref}$ level for each switching cycle the frequency of the clock signal is calculated and controlled in response to reference voltage $V_{ref}$, reference frequency $F_{ref}$, the inductor voltage variation $V_{ind}(t)$ (that follows input voltage $V_{in}(t)$ sinusoidal variations) and the RCF weighting factor as illustrated in relation of FIG. 4B:

$$I[F_{sw}] = I[F_{ref}] - RCF * I[F_{ref}] * (I[V_{ind}(t)]-I[V_{ref}])/ I[V_{ind}(t)] \qquad \textit{[EQ. 4]}$$

The RCF weighting factor in equation 4 guaranties that when ripple compensation feature is fully active (RCF = 1) the switching frequency is modulated as below to keep the input current at a constant level (fully flattened):

$$I[F_{sw}] = \{I[F_{ref}] * I[V_{ref}] / I[V_{ind}(t)]\} \qquad \textit{[EQ. 5]}$$

When ripple compensation feature is not activated (RCF = 0) the switching frequency remains fixed on the same value of the reference frequency $F_{ref}$: $I[F_{sw}] = I[F_{ref}]$. Equation 4 and the effect of RCF provides an efficient control of switching frequency ($F_{sw}$) when the ripple compensation block 420 is activated to keep the line current constant (flat) above the reference voltage $V_{ref}$ level. As a second fold advantage RCF guaranties a smooth transition with no hard transient misbehavior during activation/deactivation of the ripple compensation block.

FIG. 4B is a functional block diagram of a frequency modulator 440. Frequency modulator 440 is one possible implementation of frequency modulator 440 of FIG. 4A. As shown in FIG. 4B, frequency modulator block 440, receives input signals $I[V_{ind}]$, $I[V_{ref}]$, $I[F_{ref}]$ and RCF and in response thereto outputs the switching frequency signal $I[F_{sw}]$ to the oscillator block 442. The first term 443A in the transfer function 443 is the fixed frequency under the voltage threshold level and the second term 443B in the transfer function 443 indicates the frequency modifier term above the voltage threshold level and effect of weighting factor RCF on the modifier term.

As long as the enabling signal 436 (FIG. 4A) is not received and the RCF generator block 435 is not activated, RCF = 0 and the second term 443B in the transfer function 443 is zero. The ripple compensation block outputs $I[F_{sw}]$ = $I[F_{ref}]$ and the sinusoidal waveform of the input line current is retained. By receiving the enabling signal 436 the RCF generator block 435 is activated and RCF gradually, in one example in digital steps of 1/256, increases towards RCF = 1. The frequency modifier term 443B in the algorithm 443 gradually strengthens the effect of frequency modifier 443B. After several line cycles and full activation of frequency modulator 440 (i.e., RCF = 1), the frequency transfer function 443 appears as $I[F_{sw}] = \{I[F_{ref}] * I[V_{ref}]\}/ I[V_{ind}(t)]\}$.

Accordingly, FIG. 4B illustrates the application of equation 4 to the signals received by frequency modulator 440. As shown, if the inductor voltage is less than or equal to the threshold voltage (reference voltage Vref) then frequency modulator 440 generates signal 441 to fix the frequency of the clock signal output by the oscillator (e.g., oscillator 444) and thus, also fix the switching frequency of the drive signal 448. If, however, the inductor voltage is greater than the reference voltage Vref, then frequency modulator 440 generates signal 441 to vary the frequency of the clock signal and the switching frequency of the drive signal. As shown by equation 4, the frequency modulator decreases the switching frequency with increases in inductor voltage and increases the switching frequency with decreases in inductor voltage. As discussed above, in one embodiment, the frequency modulator decreases the frequency of the clock signal in order to reduce an input current of the power converter (e.g., to flatten, make convex, or make concave). Furthermore, equation 4 illustrates that when the frequency modulator decreases the frequency of the clock signal it does so by an amount that is proportional to a ratio of an amount that the inductor voltage exceeds the threshold voltage to the inductor voltage (e.g., assuming RCF =1 and since I[Fref] is fixed, then term 443B is proportional to {I[Vind(t)]-I[Vref]}/I[Vind(t)]).

FIG. 4C further illustrates logic components of an example frequency modulator 440. As shown in FIG. 4C, inductor voltage signal 431 is received from block 430 of FIG. 4A. Block 455 at interface of signal $I[V_{ind}(t)]$ 431 introduces a clamp function with a symbolic transfer function presented inside block 455. During each line half-cycle below the reference voltage $V_{ref}$ the inductor voltage at output of clamp block 455 (signal 461) is clamped to the reference voltage while above the reference voltage, the transfer function is linear and inductor voltage follows the sinusoidal variations of the line voltage to be used for calculations of frequency modulation. To generate the second term 443B of the frequency modulation algorithm 443 signal 462 (which is the reference voltage received on terminal 432) is deducted from the clamped inductor voltage 461 through logic block 460. The result 463 is divided to the clamped inductor voltage (signal 464) through the dividing logic block 465. Output 466 of dividing logic block 465 is coupled to terminal 472 of the multiplication block 470 and would be multiplied to the reference frequency on second terminal 471 of the multiplication block 470. The ripple compensation factor RCF is then multiplied as a weighting factor to the output signal 473 of the multiplication block 470 to generate the signal 476 (which is the second term 443B in the transfer function 443 of FIG. 4B). Signal 476 presents the frequency modifier term at above the voltage threshold level with effect of weighting factor RCF on the modifier term. Deducting the frequency modifier term on terminal 482 of the subtractor block 480 from the reference frequency coupled to terminal 481 results in modulated frequency at output 483 of the subtractor block 480 which after clamping the lower limit of switching frequency through the clamp block 485 on the minimum frequency of oscillator forms the output modulated switching frequency $I[F_{ref}]$ at output terminal 441 of the frequency modulator block 440.

It is appreciated that in each half-line cycle below the reference voltage level as mentioned above the inductor voltage signal is clamped on reference voltage $V_{ref}$ and the upper limit of the switching frequency would consequently be clamped on the reference frequency $F_{ref}$. On the other hand the lower limit of switching frequency would be defined and clamped through the clamp block 485 on the minimum frequency of the oscillator block 442. This may happen during rising slope of line voltage sinusoidal variations when inductor voltage is also ramping up, switching frequency reduces and may hit the minimum frequency limit of the oscillator.

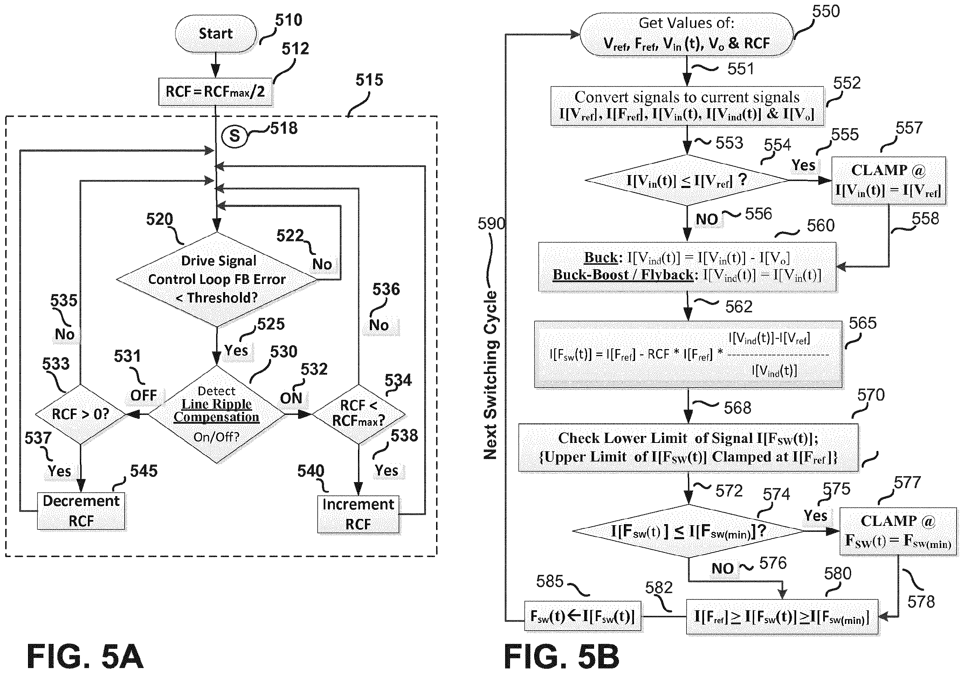

FIG. 5A is a flow chart illustrating a process of detecting and enabling line ripple compensation. FIG. 5A also illustrates RCF selection/variation from start up and during each AC line cycle (e.g., 2 line half-cycles).

FIG. 5A presents a process of the RCF selection at LED driver startup condition. At block 510 the process enters a closed loop control of RCF, incrementing / decrementing in two options: with or without activation/enabling of the line ripple compensation control block, 420 in FIG. 4A. At process block 512 at startup, RCF is adjusted/ selected at half of its maximum value $RCF_{max}$ (i.e., RCF= $RCF_{max}$/2). This half-way start point is selected to provide a faster (expedite) increment/ decrement towards the desirable stable value. Then the closed loop process 515 starts from loop start point S 518 to control the RCF value (for weighting of the frequency modifier term inside the frequency modulator block 440 in FIG 4A at activation/deactivation of RCF generator block, 435).

In the condition block 520 the main controller error is compared against a FB error threshold value. As long as the FB error is not below the threshold (option NO 522), which means regulation is not achieved, the loop goes back to point S 518, waiting and checking the condition until regulation is completed and FB error goes below (less than) the FB threshold. In condition block 520, when the drive signal control loop FB error has dropped below the threshold, then the loop continues to option Yes 525 and to the next conditional block 530 to confirm detection and activation of the line ripple compensation block feature (i.e., On/Off or Enable/Disable). The conditional block 530 detects if the Ripple Compensation block is already activated (option ON 532) or deactivated (option OFF 531). Activation of line ripple compensation feature could be by different means as explained in FIG 4A (either by FB error reference change, leading or trailing edge detection; or by exceeding a dimming phase angle threshold).

If the line ripple compensation block is detected to be active/enabled (option ON 532), control loop continues to the conditional block 534 that compares the current (last updated) RCF to the maximum allowed RCF value (could be 1 or above/ below 1) and checks if the current (last updated) RCF has not exceeded its maximum. If the RCF has hit the maximum allowed value (option NO 536) loop returns to loop start point S 518. However, as long as the RCF remains below the maximum RCF value (option "Yes" 538), the RCF would be one step incremented in block 540 before returning to the loop start point S 518.

On the other hand from conditional block 530 if the line ripple compensation block is not detected (or it is detected at OFF position disabled/ deactivated, option OFF 531), then the conditional block 533 verifies if the RCF is reduced to (and is hitting) zero. If RCF is still higher enough than zero (RCF above zero, option Yes, 537), Then RCF is Decremented in block 545 before the RCF loop closes back for the next line cycle that starts over from loop start point S 518. However, if after RCF conditional block 533, it is detected that RCF has declined towards/below zero (RCF is hitting the zero, option NO 535) the process starts over from loop start point S 518. In one embodiment, the process of FIG 5A and the loop of RCF selection 515 repeats every line cycle (every two half-line cycles).

FIG. 5B is a flow chart illustrating a process of controlling and varying the switching frequency to compensate for line ripple at each switching cycle. The process of FIG. 5B starts at process block 550 and gets the values of input voltage $V_{in}(t)$, output voltage $V_o$, reference voltage $V_{ref}$, reference frequency $F_{ref}$ and the ripple compensation factor RCF. Block 552 receives the voltage signals 551 representative of $V_{in}(t)$, $V_o$, $V_{ref}$ and $F_{ref}$. For convenience of processing these signals at output 553 of the block 552 are transferred/converted to the current signals $I[V_{in}(t)]$, $I[V_o]$, $I[V_{ref}]$ and $I[F_{ref}]$. In conditional block 554 the sinusoidal variation of input voltage $I[V_{in}(t)]$ is compared to the predefined reference voltage level $I[V_{ref}]$ and if $I[V_{in}(t)] \leq I[V_{ref}]$ (option Yes, sinusoidal voltage variation to be below the reference voltage level), then $I[V_{in}(t)]$ would be clamped at $I[V_{ref}]$. If input voltage is above the reference voltage level (option No 556), the original sinusoidal voltage variation would be considered. The input voltage variation signal $I[V_{in}(t)]$ through blocks 556 and 558 that is clamped at lower limit to $I[V_{ref}]$ (output 562 from block 560) would be used to define the inductor voltage (as a current signal, $I[V_{ind}(t)]$) in block 565 based on the switching regulator topology utilized for the LED driver; for Buck: $I[V_{ind}(t)] = I[V_{in}(t)] - I[V_o]$; or for Buckboost/Flyback: $I[V_{ind}(t)] = I[V_{in}(t)]$.

It is appreciated that $I[V_{ind}(t)]$ follows the applied clamp for input sinusoidal voltage variations below the reference voltage level $I[V_{ref}]$. The inductor voltage signal $I[V_{ind}(t)]$ 568 resulted from block 565 as well as the other updated signals $I[V_o]$, $I[V_{ref}]$, $I[F_{ref}]$ and RCF are used in calculation block 570 based on the ripple compensation functions discussed above in FIGs. 4B and 4C and with reference to equation 4.

The upper limit of $I[F_{sw}(t)]$ 572 is defined and clamped by $I[F_{ref}]$ and the lower limit of $I[F_{sw}(t)]$ 572 would be defined and clamped by the predefined minimum switching frequency (oscillator minimum frequency $F_{sw(min)}$) as shown in conditional block 574. The conditional block 574 compares the calculated signal $I[F_{sw}(t)]$ 572, from the algorithm in block 565 and clamped at upper limit in block 570, to the predefined minimum switching frequency $I[F_{sw(min)}]$ of the oscillator block 442. If in some conditions (e.g., at high line voltage and low dimming) the switching frequency $I[F_{sw}(t)]$ tends to go below the $I[F_{sw(min)}]$ (option "Yes" 575), it would be clamped (block 577) at the predefined minimum oscillator frequency, $I[F_{sw}(t)] = I[F_{sw(min)}]$. Otherwise (option "No" 576), when in block 580, $I[F_{ref}] \geq I[F_{sw}(t)] \geq I[F_{sw(min)}]$, the controlled/modulated switching frequency is in desired range, signal $I[F_{sw}(t)]$ commands the switching frequency $F_{sw}(t)$ through block 585 to run the power switch (through gate drive block 449 in FIG 4A) and keep the line current sinusoidal variation at a desired flat level (or concave/convex level depending on the selected ripple compensation factor RCF) to compensate for the low frequency ripple (and the light shimmering) at output of LED driver. This control loop process closes back for the next switching cycle 590 and repeats during the line half cycles for every switching cycle.

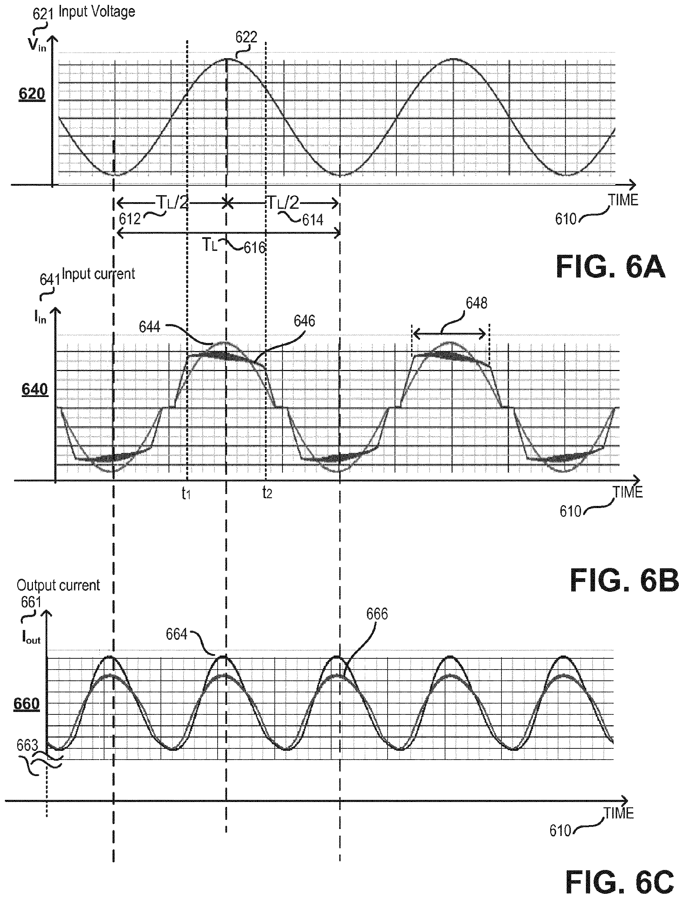

FIGs. 6A-6C illustrate an input voltage signal, and input current signals and output current signals with and without ripple compensation. It is appreciated that the time scale along the horizontal Time axis 610 is the same for FIG. 6A, 6B and 6C with half line cycles $T_L/2$, 612 and 614 and the whole line cycle of $T_L$ 616.

Graph 620 in FIG. 6A shows the sinusoidal input voltage $V_{in}$ 621 with sinusoidal waveform 622 with half line cycles $T_L/2$ 612 and 614 and the whole line cycle of $T_L$ 616 along the time axis 610. It is appreciated that the line ripple compensation block, based on teaching of the present application, may perform properly even when the input voltage waveform includes some distortion applied to the sinusoidal waveform (presence of harmonics, eg; the common problem of third harmonic component that shows up as a flat top portion near peak of sinusoidal waveform).

Graph 640 in FIG. 6B shows the input line current waveforms $I_{in}$ 641 waveforms with (646) and without (644) the Ripple Compensation feature activation. The input current waveform 644 without the Line Ripple Compensation Block activation as a result of PFC feature introduces a sinusoidal waveform with a high peak-to-peak ripple value in the output load current degrading the converter performance and causing visible shimmer on the LED load. However, the input current waveform 646 with the line ripple compensation control block activation would show a line current waveform 646 having a flat plateau of width 648 that reduces the peak-to-peak ripple value in the output current. As shown in FIG. 6B, the adjusting of the shape of the input line current waveform 646 begins each line half-cycle at time t1 and ends at time t2. The time between t1 and t2 corresponds with a magnitude of the inductor voltage $V_{ind}$ exceeding the threshold voltage, as discussed above. In one example of a Buck-boost or Flyback switching power converter, the input voltage $V_{IN}$ is representative of the inductor voltage $V_{ind}$. In another example of a buck converter, the inductor voltage $V_{ind}$ is given by the input voltage $V_{IN}$ minus the output voltage $V_{out}$ (i.e., $V_{IN}$-$V_{OUT}$).

FIG. 6C, graph 660 shows the LED driver output current $I_{out}$ 661. The output current ripple with/without the ripple compensation feature is introduced by waveform graphs 664 and 666 (respectively without and with the line ripple compensation control block activation). It is appreciated that to magnify the AC ripple component and for a more clear comparison of ripple peak to peak values on the output current $I_{out}$ 661 the DC offset of output current is only shown by the discontinued/broken vertical axis of $I_{out}$ 661 and the DC component current scale on the vertical axis $I_{out}$ 661 is scaled down that is presented by the broken line 663.

The reduced peak to peak value of the output ripple current waveform 666 with the line ripple compensation control block activation in comparison to the output ripple current waveform 664 without the line ripple compensation control block activation shows the peak to peak ripple reduction that reduces the effect of output light shimmer (may eliminate the visible effect of light shimmering for human eyes).

It is appreciated that the specific example voltages, currents, times, etc., are provided for explanation purposes and that other values may also be employed in other embodiments and examples in accordance with the teachings of the present disclosure.

**Claims**

1.    A controller (150, 350, 402) adapted to be used in an ac-to-dc power converter (100), the controller comprising:

   an oscillator (442) configured to generate a clock signal (444) having a frequency; a drive circuit (445) configured to receive the clock signal and to generate a drive signal (448) in response thereto, the drive signal being used to control switching of a switch (141, 341, 450) of the power converter so as to control a transfer of energy across an energy transfer element (342) from an input (Vin, 130, 315, 410, 621) of the power converter to an output ($V_O$) of the power converter, wherein a switching frequency of the drive signal is based on the frequency of the clock signal and is much greater than a frequency of a time-varying inductor voltage (Vind) across an inductor (343) of the energy transfer element;
   an input voltage block (430) configured to receive a first signal (152) representative of an instantaneous value of an input voltage provided to the input (Vin, 130, 315, 410, 621) of the power converter and to generate a second signal (431) representative of the magnitude of the time-varying inductor voltage in response thereto;
   **characterized in that** the controller includes
   a frequency modulator (440) adapted to receive the second signal (431), the frequency modulator being coupled to the oscillator and configured to control the frequency of the clock signal during each a.c. power line half cycle of the time-varying inductor voltage in response to a magnitude of the time-varying inductor voltage in order to reduce a peak-to-peak ripple value in an output current of the power converter that is due to the lower frequency time variations in the inductor voltage, wherein the frequency modulator is configured to control the frequency of the clock signal during each a.c. power line half cycle to be a fixed frequency when the magnitude of the inductor voltage is less than or equal to a threshold voltage, and wherein the frequency modulator is configured to vary the frequency of the clock signal during each a.c. power line half cycle to be less than the fixed frequency to adjust a shape of an input current of the power converter when the magnitude of the inductor voltage is greater than the threshold voltage.

2. The controller of claim 1, wherein the frequency modulator is configured to vary the frequency of the clock signal during each a.c. power line half line cycle to adjust the shape of the input current
by decreasing the frequency of the clock signal in response to increases in the magnitude of the inductor voltage over time and
by increasing the frequency of the clock signal in response to decreases in the magnitude of the inductor voltage over time.

3. The controller of claim 2, wherein the clock signal includes a non-zero minimum frequency, and wherein the frequency modulator is configured to stop decreasing the frequency of the clock signal when the minimum frequency is reached.

4. The controller of any one of claims 2 to 3, wherein the frequency modulator is configured to stop increasing the frequency of the clock signal when the fixed frequency is reached.

5. The controller of any preceding claim, wherein the frequency modulator is configured to vary the frequency of the clock signal by an amount that is proportional to a ratio of an amount that the inductor voltage exceeds the threshold voltage divided by the inductor voltage.

6. The controller of any preceding claim, wherein the frequency modulator is configured to continuously adjust the frequency of the clock signal while the magnitude of the inductor voltage exceeds the threshold voltage such that a ratio of the fixed frequency to the switching frequency is substantially equal to a ratio of the magnitude of the inductor voltage to the threshold voltage.

7. The controller of any preceding claim, further comprising a ripple compensation factor generator (435) coupled to the frequency modulator and configured to control a rate at which the frequency modulator increases and decreases the frequency of the clock signal by weighting a frequency modifier term (443B) inside the frequency modulator (440), wherein the weighting of the frequency modifier term is selected to smoothly transform a sinusoidal input current waveform corresponding to the second signal (431) to a flat, concave, or convex shape over multiple line cycles to compensate ripple current at the output of the power converter.

8. The controller of claim 7, wherein the frequency modulator is configured to set the frequency of the clock signal to a percentage amount of the fixed frequency when the magnitude of the inductor voltage is greater than the threshold voltage, and wherein the ripple compensation factor generator is configured to control the rate at which the frequency modulator increases and decreases the frequency of the clock signal such that the frequency modulator gradually changes the frequency of the clock signal over several input voltage a.c. power line cycles of the power converter until the frequency is equal to the percentage amount of the fixed frequency.

9. The controller of any one of claims 7 or 8, wherein the ripple compensation factor generator is configured to control the frequency modulator such that the frequency modulator varies the frequency of the clock signal in digital steps, for example, in 256 digital steps.

10. The controller of any preceding claim, wherein the controller is configured to detect dimming at the input of the power converter and to enable the frequency modulator in response thereto, wherein when disabled, the frequency modulator is configured to control the frequency of the clock signal to be the fixed frequency regardless of the magnitude of the inductor voltage.

11. The controller of claim 1, wherein the input voltage block is configured to be coupled to receive a third signal (156) that is representative of an output voltage of the power converter, wherein the input voltage block is configured to generate the second signal in response to both the first signal and the third signal.

**12.** An ac-to-dc power converter comprising:

an energy transfer element (342) coupled between an input and an output of the power converter;
a switch (141, 341, 450) coupled to an inductor of the energy transfer element; and
a controller (150, 350, 402) according to any one of claims 1 to 11 coupled to the switch to control switching of the switch.

**13.** A device comprising:

a light emitting diode load (178, 378); and
the ac-to-dc power converter of claim 12 having an output coupled to the light emitting diode load.

**Patentansprüche**

**1.** Controller (150, 350, 402), der dafür ausgelegt ist, in einem Gleichstrom/Wechselstrom-Leistungsumsetzer (100) verwendet zu werden, wobei der Controller Folgendes umfasst:

einen Oszillator (442), der dafür ausgelegt ist, ein Taktsignal (444), das eine Frequenz aufweist, zu erzeugen;
eine Treiberschaltung (445), die dafür ausgelegt ist, das Taktsignal zu empfangen und in Reaktion darauf ein Treibersignal (448) zu erzeugen, wobei das Treibersignal verwendet wird, um das Schalten eines Schalters (141, 341, 450) des Leistungsumsetzers zu steuern, um eine Energieübertragung über ein Energieübertragungselement (342) von einem Eingang (Vin, 130, 315, 410, 621) des Leistungsumsetzers zu einem Ausgang des Leistungsumsetzers zu steuern, wobei eine Schaltfrequenz des Treibersignals auf der Frequenz des Taktsignals basiert und viel größer als eine Frequenz einer zeitlich variierenden Induktorspannung (Vind) über einem Induktor (343) des Energieübertragungselements ist;
einen Eingangsspannungsblock (430), der dafür ausgelegt ist, ein erstes Signal (152) zu empfangen, das einen momentanen Wert einer Eingangsspannung, die dem Eingang (Vin, 130, 315, 410, 621) des Leistungsumsetzers bereitgestellt wird, repräsentiert, und ein zweites Signal (431), das die Größe der zeitlich variierenden Induktorspannung repräsentiert, in Reaktion darauf zu erzeugen; **dadurch gekennzeichnet, dass** der Controller Folgendes enthält
einen Frequenzmodulator (440), der dafür ausgelegt ist, das zweite Signal (431) zu empfangen, wobei der Frequenzmodulator an den Oszillator gekoppelt ist und dafür ausgelegt ist, die Frequenz des Taktsignals während jedes Halbzyklus der Wechselstrom-Leistungsleitung der zeitlich variierenden Induktorspannung in Reaktion auf die Größe der zeitlich variierenden Induktorspannung zu steuern, um einen Spitze-zu-Spitze-Welligkeitswert in einem Ausgangsstrom des Leistungsumsetzers zu verringern, der auf die zeitlichen Variationen mit geringerer Frequenz in der Induktorspannung zurückzuführen ist, wobei der Frequenzmodulator dafür ausgelegt ist, die Frequenz des Taktsignals während jedes Halbzyklus der Wechselstrom-Leistungsleitung zu steuern, so dass sie eine feste Frequenz ist, wenn die Größe der Induktorspannung kleiner als eine oder gleich einer Schwellenspannung ist, und wobei der Frequenzmodulator dafür ausgelegt ist, die Frequenz des Taktsignals während jedes Halbzyklus der Wechselstrom-Leistungsleitung zu variieren, so dass sie kleiner als die feste Frequenz ist, um eine Form eines Eingangsstroms des Leistungsumsetzers einzustellen, wenn die Größe der Induktorspannung größer als die Schwellenspannung ist.

**2.** Controller nach Anspruch 1, wobei der Frequenzmodulator dafür ausgelegt ist, die Frequenz des Taktsignals während jedes Halbleitungszyklus der Wechselstrom-Leistungsleitung zu variieren, um die Form des Eingangsstroms einzustellen,
durch Verringern der Frequenz des Taktsignals in Reaktion auf die Zunahmen der Größe der Induktorspannung im Lauf der Zeit und
durch Vergrößern der Frequenz des Taktsignals in Reaktion auf die Abnahmen der Größe der Induktorspannung im Lauf der Zeit.

**3.** Controller nach Anspruch 2, wobei das Taktsignal eine von null verschiedene minimale Frequenz enthält und wobei der Frequenzmodulator dafür ausgelegt ist, das Verringern der Frequenz des Taktsignals zu stoppen, wenn die minimale Frequenz erreicht ist.

**4.** Controller nach einem der Ansprüche 2 bis 3, wobei der Frequenzmodulator dafür ausgelegt ist, das Vergrößern der Frequenz des Taktsignals zu stoppen, wenn die feste Frequenz erreicht ist.

**5.** Controller nach einem vorhergehenden Anspruch, wobei der Frequenzmodulator dafür ausgelegt ist, die Frequenz des Taktsignals um einen Betrag zu variieren, der zu einem Verhältnis eines Betrags, um den die Induktorspannung den Schwellenwert übersteigt, geteilt durch die Induktorspannung proportional ist.

**6.** Controller nach einem vorhergehenden Anspruch, wobei der Frequenzmodulator dafür ausgelegt ist, die Frequenz des Taktsignals kontinuierlich einzustellen, während die Größe der Induktorspannung die Schwellenspannung übersteigt, so dass ein Verhältnis der festen Frequenz zur Schaltfrequenz im Wesentlichen gleich einem Verhältnis der Größe der Induktorspannung zu der Schwellenspannung ist.

**7.** Controller nach einem vorhergehenden Anspruch, der ferner einen Welligkeitskompensationsfaktorgenerator (435) umfasst, der an den Frequenzmodulator gekoppelt ist und dafür ausgelegt ist, eine Rate, mit der der Frequenzmodulator die Frequenz des Taktsignals vergrößert oder verkleinert, durch die Gewichtung eines Frequenzmodifikatorterms (443B) innerhalb des Frequenzmodulators (440) zu steuern, wobei die Gewichtung des Frequenzmodifikatorterms so gewählt ist, um eine sinusförmige Eingangsstrom-Signalform entsprechend dem zweiten Signal (431) in eine flache, konkave oder konvexe Form über mehrere Leitungszyklen zu transformieren, um einen Welligkeitsstrom am Ausgang des Leistungsumsetzers zu kompensieren.

**8.** Controller nach Anspruch 7, wobei der Frequenzmodulator dafür ausgelegt ist, die Frequenz des Taktsignals auf einen Prozentbetrag der festen Frequenz zu setzen, wenn die Größe der Induktorspannung größer als die Schwellenspannung ist, und wobei der Welligkeitskompensationsfaktorgenerator dafür ausgelegt ist, die Rate, mit der der Frequenzmodulator die Frequenz des Taktsignals vergrößert und verkleinert, zu steuern, so dass der Frequenzmodulator die Frequenz des Taktsignals über mehrere Eingangsspannungszyklen der Wechselstrom-Leistungsleitung des Leistungsumsetzers allmählich ändert, bis die Frequenz gleich dem Prozentbetrag der festen Frequenz ist.

**9.** Controller nach einem der Ansprüche 7 oder 8, wobei der Welligkeitskompensationsfaktorgenerator dafür ausgelegt ist, den Frequenzmodulator zu steuern, so dass der Frequenzmodulator die Frequenz des Taktsignals in digitalen Schritten, z. B. in 256 digitalen Schritten, variiert.

**10.** Controller nach einem vorhergehenden Anspruch, wobei der Controller dafür ausgelegt ist, das Dimmen am Eingang des Leistungsumsetzers zu detektieren und den Frequenzmodulator, wenn er deaktiviert ist, in Reaktion darauf freizugeben, wobei der Frequenzmodulator dafür ausgelegt ist, die Frequenz des Taktsignals zu steuern, so dass sie ungeachtet der Größe der Induktorspannung die feste Frequenz ist.

**11.** Controller nach Anspruch 1, wobei der Eingangsspannungsblock dafür ausgelegt ist, angeschlossen zu sein, um ein drittes Signal (156) zu empfangen, das eine Ausgangsspannung des Leistungsumsetzers repräsentiert, wobei der Eingangsspannungsblock dafür ausgelegt ist, das zweite Signal in Reaktion sowohl auf das erste Signal als auch auf das dritte Signal zu erzeugen.

**12.** Wechselstrom-zu-Gleichstrom-Leistungsumsetzer, der Folgendes umfasst:

ein Energieübertragungselement (342), das zwischen einen Eingang und einen Ausgang des Leistungsumsetzers gekoppelt ist;
einen Schalter (141, 341, 450), der an einen Induktor des Energieübertragungselements gekoppelt ist; und
einen Controller (150, 350, 402) nach einem der Ansprüche 1 bis 11, der an den Schalter gekoppelt ist, um das Schalten des Schalters zu steuern.

**13.** Vorrichtung, die Folgendes umfasst:

eine Leuchtdioden-Last (178, 378); und
einen Wechselstrom-zu-Gleichstrom-Leistungsumsetzer nach Anspruch 12, der einen Ausgang aufweist, der an die Leuchtdioden-Last gekoppelt ist.

**Revendications**

**1.** Module de commande (150, 350, 402) adapté à être utilisé dans un convertisseur de courant alternatif-continu (100), le module de commande comprenant :

un oscillateur (442) configuré pour générer un signal d'horloge (444) possédant une certaine fréquence ;

un circuit de pilotage (445) configuré pour recevoir le signal d'horloge et pour générer, en réponse à celui-ci, un signal de pilotage (448), le signal de pilotage étant utilisé pour commander la commutation d'un commutateur (141, 341, 450) du convertisseur de courant de manière à commander un transfert d'énergie au travers d'un élément de transfert d'énergie (342) depuis une entrée (Vin, 130, 315, 410, 621) du convertisseur de courant jusqu'à une sortie ($V_o$) du convertisseur de courant, une fréquence de commutation du signal de pilotage étant fonction de la fréquence du signal d'horloge et largement supérieure à une fréquence d'une tension d'inductance variant dans le temps (Vind) aux bornes d'une inductance (343) de l'élément de transfert d'énergie ;

un bloc de tension d'entrée (430) configuré pour recevoir un premier signal (152) représentant une valeur instantanée d'une tension d'entrée fournie à l'entrée (Vin, 130, 315, 410, 621) du convertisseur de courant et pour générer, en réponse à celui-ci, un deuxième signal (431) représentant l'amplitude de la tension d'inductance variant dans le temps ;

le module de commande étant **caractérisé en ce qu'**il comporte

un modulateur de fréquence (440) adapté à recevoir le deuxième signal (431), le modulateur de fréquence étant couplé à l'oscillateur et configuré pour commander la fréquence du signal d'horloge durant chaque moitié de cycle de ligne d'alimentation alternative de la tension d'inductance variant dans le temps en réponse à une amplitude de la tension d'inductance variant dans le temps dans le but de réduire une valeur d'ondulation crête à crête dans un courant de sortie du convertisseur de courant due aux variations temporelles aux fréquences plus basses de la tension d'inductance, le modulateur de fréquence étant configuré pour commander la fréquence du signal d'horloge durant chaque moitié de cycle de ligne d'alimentation alternative pour la caler sur une fréquence fixée lorsque l'amplitude de la tension d'inductance est inférieure ou égale à une tension de seuil, et le modulateur de fréquence étant configuré pour faire varier la fréquence du signal d'horloge durant chaque moitié de cycle de ligne d'alimentation alternative pour la rendre inférieure à la fréquence fixée dans le but d'ajuster une forme d'un courant d'entrée du convertisseur de courant lorsque l'amplitude de la tension d'inductance est supérieure à la tension de seuil.

2. Module de commande selon la revendication 1, dans lequel le modulateur de fréquence est configuré pour faire varier la fréquence du signal d'horloge durant chaque moitié de cycle de ligne d'alimentation alternative dans le but d'ajuster la forme du courant d'entrée

par diminution de la fréquence du signal d'horloge en réponse à des augmentations de l'amplitude de la tension d'inductance au fil du temps et

par augmentation de la fréquence du signal d'horloge en réponse à des diminutions de l'amplitude de la tension d'inductance au fil du temps.

3. Module de commande selon la revendication 2, dans lequel le signal d'horloge comporte une fréquence minimale non nulle, et dans lequel le modulateur de fréquence est configuré pour interrompre la diminution de la fréquence du signal d'horloge une fois la fréquence minimale atteinte.

4. Module de commande selon l'une quelconque des revendications 2 à 3, dans lequel le modulateur de fréquence est configuré pour interrompre l'augmentation de la fréquence du signal d'horloge une fois la fréquence fixée atteinte.

5. Module de commande selon l'une quelconque des revendications précédentes, dans lequel le modulateur de fréquence est configuré pour faire varier la fréquence du signal d'horloge d'une quantité proportionnelle à un rapport d'une quantité de laquelle la tension d'inductance dépasse la tension de seuil divisée par la tension d'inductance.

6. Module de commande selon l'une quelconque des revendications précédentes, dans lequel le modulateur de fréquence est configuré pour ajuster de façon continue la fréquence du signal d'horloge tant que l'amplitude de la tension d'inductance dépasse la tension de seuil de façon à ce qu'un rapport de la fréquence fixée sur la fréquence de commutation soit sensiblement égal à un rapport de l'amplitude de la tension d'inductance sur la tension de seuil.

7. Module de commande selon l'une quelconque des revendications précédentes, comprenant en outre un générateur de facteur de compensation d'ondulation (435) couplé au modulateur de fréquence et configuré pour commander une vitesse à laquelle le modulateur de fréquence augmente et diminue la fréquence du signal d'horloge par pondération d'un terme modificateur de fréquence (443B) dans le modulateur de fréquence (440), la pondération du terme modificateur de fréquence étant choisie de manière à transformer de façon régulière une forme d'onde de courant d'entrée sinusoïdale correspondant au deuxième signal (431) en une forme plane, concave ou convexe sur plusieurs cycles de ligne dans le but de compenser une ondulation du courant à la sortie du convertisseur de courant.

**8.** Module de commande selon la revendication 7, dans lequel le modulateur de fréquence est configuré pour établir la fréquence du signal d'horloge à une quantité en pourcentage de la fréquence fixée lorsque l'amplitude de la tension d'inductance est supérieure à la tension de seuil, et dans lequel le générateur de facteur de compensation d'ondulation est configuré pour commander la vitesse à laquelle le modulateur de fréquence augmente et diminue la fréquence du signal d'horloge de sorte que le modulateur de fréquence modifie progressivement la fréquence du signal d'horloge sur plusieurs cycles de ligne d'alimentation alternative de tension d'entrée du convertisseur de courant jusqu'à ce que la fréquence soit égale à la quantité en pourcentage de la fréquence fixée.

**9.** Module de commande selon l'une quelconque des revendications 7 ou 8, dans lequel le générateur de facteur de compensation d'ondulation est configuré pour commander le modulateur de fréquence de sorte que le modulateur de fréquence fasse varier la fréquence du signal d'horloge selon des pas numériques, par exemple selon 256 pas numériques.

**10.** Module de commande selon l'une quelconque des revendications précédentes, lequel module de commande est configuré pour détecter une gradation à l'entrée du convertisseur de courant et pour activer, en réponse à celle-ci, le modulateur de fréquence, le modulateur de fréquence étant, une fois désactivé, configuré pour commander la fréquence du signal d'horloge pour la caler sur la fréquence fixée indépendamment de l'amplitude de la tension d'inductance.

**11.** Module de commande selon la revendication 1, dans lequel le bloc de tension d'entrée est configuré pour être couplé de manière à recevoir un troisième signal (156) représentant une tension de sortie du convertisseur de courant, le bloc de tension d'entrée étant configuré pour générer le deuxième signal en réponse à la fois au premier signal et au troisième signal.

**12.** Convertisseur de courant alternatif-continu, comprenant :

un élément de transfert d'énergie (342) couplé entre une entrée et une sortie du convertisseur de courant ;
un commutateur (141, 341, 450) couplé à une inductance de l'élément de transfert d'énergie ; et
un module de commande (150, 350, 402) selon l'une quelconque des revendications 1 à 11 couplé au commutateur dans le but de commander la commutation du commutateur.

**13.** Dispositif, comprenant :

une charge du type diode électroluminescente (178, 378) ; et
le convertisseur de courant alternatif-continu selon la revendication 12 doté d'une sortie couplée à la charge du type diode électroluminescente.

**FIG. 1**

FIG. 2A

FIG. 2B

FIG. 3

FIG. 4A

**Frequency Modulator**

If $\{V_{ind} > V_{ref}\}$:

$$I[F_{sw}(t)] = I[F_{ref}] - RCF * I[F_{ref}] * \frac{I[V_{ind}(t)] - I[V_{ref}]}{I[V_{ind}(t)]}$$

If $\{V_{ind} \leq V_{ref}\}$: $I[F_{sw}(t)] = I[F_{ref}]$

**FIG. 4B**

**FIG. 4C**

# FIG. 5A

Start — 510

RCF = RCFmax/2 — 512 ~ 515

(S) ~ 518

520: Drive Signal Control Loop FB Error < Threshold?
- 522 No
- 525 Yes

531: Detect Line Ripple Compensation On/Off?
- OFF
- ON — 532 ~ 530

533: RCF > 0?
- 535 No
- 537 Yes

545: Decrement RCF

534: RCF < RCFmax?
- 536 No
- 538 Yes

540: Increment RCF

# FIG. 5B

Next Switching Cycle ~ 590

550: Get Values of: $V_{ref}$, $F_{ref}$, $V_{in}(t)$, $V_o$ & RCF

551: Convert signals to current signals $I[V_{ref}]$, $I[F_{ref}]$, $I[V_{in}(t)]$, $I[V_{ind}(t)]$ & $I[V_o]$ — 552, 553, 554

556: $I[V_{in}(t)] \leq I[V_{ref}]$ ?
- NO ~ 556
- Yes — 555

557: CLAMP @ $I[V_{in}(t)] = I[V_{ref}]$ ~ 558

560 / 562: Buck: $I[V_{ind}(t)] = I[V_{in}(t)] - I[V_o]$
Buck-Boost / Flyback: $I[V_{ind}(t)] = I[V_{in}(t)]$

565: $I[F_{sw}(t)] = I[F_{ref}] - RCF * I[F_{ref}] * \dfrac{I[V_{ind}(t)] - I[V_{ref}]}{I[V_{ind}(t)]}$ ~ 570

568 / 570: Check Lower Limit of Signal $I[F_{sw}(t)]$; {Upper Limit of $I[F_{sw}(t)]$ Clamped at $I[F_{ref}]$}

572 / 574: $I[F_{sw}(t)] \leq I[F_{sw(min)}]$ ?
- NO ~ 576
- Yes ~ 575

577: CLAMP @ $F_{sw}(t) = F_{sw(min)}$

580: $I[F_{ref}] \geq I[F_{sw}(t)] \geq I[F_{sw(min)}]$ ~ 578

585 / 582: $F_{sw}(t) \leftarrow I[F_{sw}(t)]$

21

621 Input Voltage

$V_{in}$

**620**

622

←$T_L/2$→ ✳ ←$T_L/2$→
612 614

$T_L$ 616

TIME
610

**FIG. 6A**

641 Input current

$I_{in}$

**640**

644 646

648

$t_1$ $t_2$

TIME
610

**FIG. 6B**

Output current
661

$I_{out}$

**660**

664 666

663

TIME
610

**FIG. 6C**

22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014035893 A

- US 20040070382 A

**Non-patent literature cited in the description**

- **WU et al.** Variable On-Time (VOT)-Controlled Critical Conduction Mode Buck PFC Converter for High-Input AC/DC HB-LED Lighting Applications. *IEEE Transactions on Power Electronics,* 2012, vol. 27 (11), 4530-4539